# EUROPÄISCHE PATENTSCHRIFT

(11) **EP 1 663 568 B1**
(45) Veröffentlichungstag und Bekanntmachung des Hinweises auf die Patenterteilung: **13.06.2012**
(21) Anmeldenummer: 04763841.6
(22) Anmeldetag: 05.08.2004
(51) Int. Cl.: B23K 35/28, B23K 1/20, B23K 1/00, B23K 103/10, B23K 101/14

(54) **LÖTWERKSTÜCK, LÖTVERFAHREN UND WÄRMETAUSCHER**
SOLDERING WORK PIECE, SOLDERING METHOD AND HEAT EXCHANGER
PIECE A BRASER, PROCEDE DE BRASAGE ET ECHANGEUR DE CHALEUR

(30) Priorität: 11.09.2003 DE 10342242
(43) Veröffentlichungstag der Anmeldung: 07.06.2006
(73) Patentinhaber: Behr GmbH & Co. KG, 70469 Stuttgart (DE)
(72) Erfinder: HEEB, Wolfgang, 73614 Schorndorf (DE); KNÖDLER, Wolfgang, 71332 Waiblingen (DE); VÖLKER, Cord, 71522 Backnang (DE)
(74) Vertreter: Grauel, Andreas
(86) Internationale Anmeldenummer: PCT/EP2004/008801
(87) Internationale Veröffentlichungsnummer: WO 2005/028152

(56) Entgegenhaltungen:
- EP-A- 0 363 580
- WO-A-03/076113
- DE-A- 3 206 809
- US-A- 3 747 199
- US-A- 5 193 739
- SCHMATZ D J ET AL: "A FLUXLESS PROCESS FOR BRAZING ALUMINUM HEAT EXCHANGERS IN INERT GAS" WELDING JOURNAL, AMERICAN WELDING SOCIETY. MIAMI, US, Bd. 62, Nr. 10, 1. Oktober 1983 (1983-10-01), Seiten 31-38, XP002029306 ISSN: 0043-2296
- DATABASE WPI Week 199913, Derwent Publications Ltd., London, GB; AN 1999-148989 & JP 11 012762 A (MITSUBISHI ALUMINIUM CO LTD) 19 Januar 1999

## Beschreibung

Die Erfindung bezieht sich auf ein Lötwerkstück aus Aluminium und/oder Aluminiumverbindungen, auf ein Lötverfahren sowie auf einen derartig gelöteten Wärmetauscher.

Zum Fügen zweier metallischer Werkstücke mittels einer Lötverbindung ist es erforderlich, dass die an den Oberflächen der Werkstücke gebildete Oxidschicht vor dem Löten zumindest teilweise entfernt wird und beim Lötprozess nicht neu gebildet wird. In der Regel erfolgt dies mit speziellen Lösemitteln für Metalloxide, den sogenannten Flussmitteln. Derzeit ist es beispielsweise zum Hartlöten von Aluminium-Bauteilen für Wärmetauscher, wie sie in der Automobilbranche verwendet werden, üblich, spezielle Lötverfahren einzusetzen, insbesondere das so genannte "Nocolok"-Lötverfahren mit Flussmitteln auf der Basis von Kaliumfluoroaluminaten.

Bereits die Applikation der Flussmittel gestaltet sich allerdings oft sehr aufwändig und kostenintensiv. Darüber hinaus sind die Bauteile nach dem Löten mit Flussmitteln beaufschlagt, die vielfach aufwändige Reinigungs- und/oder andere Oberflächenbehandlungen nach dem Lötprozess erfordern, um den Anforderungen der Industrie an Bauteile hinsichtlich erwünschter Eigenschaften, wie korrosionsbeständiger, hydrophiler und/oder haftender Oberflächen und/oder Gesichtspunkten wie der Reinheit, dem Produktdesign oder der Optik gerecht zu werden. So verbleibt auch das im Handel unter der Bezeichnung "Nocolok" erhältliche Flussmittel nach dem Löten von Aluminium-Bauteilen auf der Oberfläche und überzieht sie mit einer kristallinen Schicht, die je nach Verwendungszweck weiteren Reinigungs- und Konversionsbehandlungen unterzogen werden muss. Außerdem wirkt sich die Anwendung von Flussmitteln negativ für die Umwelt sowie für die verwendeten Geräte und Maschinen aus, die einem erhöhten Verschleiß ausgesetzt sind, was mit einer niedrigeren Standzeit verbunden ist. Darüber hinaus wird die Verwendung von zink- und/oder magnesiumhaltigen Werkstoffen erschwert, da das Zink beziehungsweise das Magnesium mit dem Flussmittel reagiert, so dass der Flussmittelverbrauch erhöht wird und die Materialeigenschaften beeinflusst werden.

Um diese Nachteile zu vermeiden, ist es wünschenswert, ein Verfahren zum Löten von Aluminium zur Verfügung zu stellen, bei dem die Oberfläche eines Lötwerkstücks aus Aluminium oder Aluminiumverbindungen nicht mehr mit einem Flussmittel versehen zu werden braucht.

Ein flussmittelfreies Entfernen oder Aufreißen der an der metallischen Oberfläche gebildeten Oxidschicht kann durch eine Vorbehandlung des betreffenden Werkstücks durch eine Plattierung auf das Lot, beispielsweise das sogenannte Nickel-Aluminium-Löten, oder durch das Ausdampfen von Elementen, z. B. Magnesium, aus dem Grundwerkstoff oder der Lotplattierung beim Vakuumlöten erfolgen.

Aus D.J. Schmatz und W.L. Winterbottom, "A Fluxless Process for Brazing Aluminium Heat exchangers in Inert Gas", Welding Journal, American Welding Society, Miami, US, Bd. 62, Nr. 10, ist ein solches Verfahren bekannt.

Beim flussmittelfreien Hart- und Hochtemperaturlöten in speziell entwickelten, elektrisch beheizbaren Vakuumöfen wirkt das Vakuum wie eine reduzierende Atmosphäre. Damit können metallisch blanke Oberflächen für eine Benetzung des Lotes auf den zu verbindenden Bauteilen erzielt und das Anwachsen von Metalloxidschichten verhindert werden. Nachteilhaft beim Vakuumlöten sind allerdings die erforderlichen technisch aufwändigen und somit teuren Lötanlagen sowie die kostenintensive Vorbehandlung zur Reinigung der zum Löten vorgesehenen Werkstücke.

Der Erfindung liegt daher die Aufgabe zugrunde, ein Lötwerkstück sowie ein Lötverfahren zum flussmittelfreien Löten anzugeben, das wirtschaftlich und ohne erheblichen Aufwand als Alternative zum Löten mit Flussmitteln großtechnisch realisierbar ist.

Diese Aufgabe wird durch ein Lötwerkstück mit den Merkmalen des Anspruchs 1, durch ein Verfahren mit den Merkmalen des Anspruchs 9 sowie durch einen Wärmetauscher mit den Merkmalen des Anspruchs 14 gelöst.

Zur Ausbildung einer stabilen Lötverbindung ist es vorgesehen, das Lot vom Werkstück oder von außen zwischen die miteinander zu verbindenden Werkstücke fließen zu lassen. Es sollte folglich ein Aufreißen oder zumindest teilweises Entfernen der das Lötwerkstück bedeckenden Oxid- und/oder Hydroxidschicht ermöglicht werden, damit das Lot in gebildete Inhomogenitäten, wie Kerben, Poren, Risse oder ähnliches, in der Oxid- und/oder Hydroxidschicht eindringen und eine zuverlässige Lötverbindung zwischen den zu fügenden Werkstücken gewährleistet werden kann.

Der an die Oxid- und/oder Hydroxidschicht angrenzende Grundwerkstoff des Werkstücks weist dabei eine andere Wärmeausdehnung auf als die Oxidundloder Hydroxidschicht, wodurch sich infolge der Erwärmung beim Lötvorgang Spannungen in der Oxid- und/oder Hydroxidschicht und im Grenzbereich zwischen dem Grundwerkstoff und der Oxid- und/oder Hydroxidschicht aufbauen.

Die natürliche Oxid- und/oder Hydroxidschicht, die sich auf allen der Umgebungsluft ausgesetzten Oberflächen von Werkstücken aus Aluminium oder Aluminiumverbindungen bildet weist üblicherweise eine Dicke kleiner als 10 nm auf und kann an feuchter Luft bis zu 20 nm dick sein. Aufgrund dieser geringen Dicke weist die Oxid- und/oder Hydroxidschicht eine Flexibilität auf, so daß die thermischen Spannungen innerhalb der Oxid- und/oder Hydroxidschicht abgebaut werden können.

Ein Grundgedanke der Erfindung ist es, die Dicke, wie mittlere Dicke, der Oxid- und/oder Hydroxidschicht gezielt so zu wählen, daß thermische Spannungen nicht mehr aufgrund der Flexibilität innerhalb der Oxid- und/oder Hydroxidschicht abbaubar sind. Bei Erwärmung auf Löttemperatur werden die Spannungen so groß, dass sich in der Oxid- und/oder Hydroxidschicht Inhomogenitäten, insbesondere Kerben, Poren und/oder Risse in insbesondere vertikaler Richtung bezüglich der Oberfläche des Lötwerkstücks bilden und dass sich die Oxid- und/oder Hydroxidschicht unter Umständen zumindest teilweise ablöst. Flüssiges Lotmaterial kann dann in die Risse beziehungsweise zwischen das Werkstück und die Oxid- und/oder Hydroxidschicht eindringen.

Die Aufgabe der Erfindung wird also dadurch gelöst, dass eine Dicke der an einer Oberfläche des Lötwerkstücks angeordneten Oxid- und/oder Hydroxidschicht größer ist als 10 mm. Vorteilhaft ist eine Dicke größer 25 nm, besonders bevorzugt eine Dicke größer 50 nm.

Ist die Dicke der Oxid- und/oder Hydroxidschicht besonders groß, wird die gewünschte Rissbildung aufgrund einer inneren Stabilität der Oxid- und/oder Hydroxidschicht erschwert, so daß eine Schichtdicke kleiner 1000 nm, vorzugsweise kleiner 500 nm von Vorteil ist.

Bei üblichen Lötbedingungen für Aluminiumwerkstoffe, also Temperaturen etwa zwischen 500 °C und 660 °C, hat sich eine Dicke der Oxid- und/oder Hydroxidschicht zwischen 80 nm und 250 nm als besonders vorteilhaft für die flussmittelfreie Lötbarkeit von Werkstücken, insbesondere Wärmetauscherteilen aus Aluminium beziehungsweise Aluminiumverbindungen erwiesen.

Für die Erzeugung einer Oxidschicht vor dem Löten werden zweckmäßigerweise bekannte, vorzugsweise chemische oder elektrochemische oder physikalische Verfahren verwendet. Als chemisches Herstellungsverfahren kommt beispielsweise das Böhmit-Verfahren in Betracht, wodurch die Oxid- und/oder Hydroxidschicht vorteilhaft überwiegend aus Böhmit besteht, wobei eine Expositionszeit von einer Minute bis zu einer Stunde, insbesondere von einer Minute bis zu fünfzehn Minuten, und eine Temperatur von 80 °C bis 150 °C, insbesondere 100 °C bis 120 °C, gewählt werden. Hierbei wird üblicherweise Wasser eingesetzt, das auch Chemikalien enthalten kann. Ebenso kommt eine Temperatur zwischen 15 °C und 80 °C bei einer Werkstücktemperatur bis 550 °C in Frage. Alternativ kann die Oberfläche des Werkstücks zur Ausbildung einer Oxidschicht elektrochemisch behandelt werden. Dafür wird beispielsweise das bekannte Eloxalverfahren, für elektrolytische Oxidation des Aluminiums, angewandt mit einer Expositionszeit von einer Minute bis zu einer Stunde, insbesondere von einer Minute bis zu 10 Minuten, einer Temperatur von 20 °C bis 50 °C und einer Spannung von 40 V. Als Beispiel für eine physikalische Erzeugung einer definierten Oxidschicht kann das PVD-Verfahren (Physical Vapor Deposition) eingesetzt werden, bei dem vorzugsweise eine Biasspannung von - 40 V und ein Beschichtungsdruck von 0,1 mbar bis 1 mbar eingestellt werden. Eine weitere Möglichkeit ist die Ausbildung von Mischoxidschichten, die aus Aluminium- und/oder anderen Oxiden bestehen und über eine chemische Reaktion herstellbar sind. Wegen der Bildung einer Oxid- undloder Hydroxidschicht, die die Ausbildung von Inhomogenitäten für das einzubringende Lot erlaubt, ist eine solche Vorbehandlung der zu verbindenden Werkstücke gerade für standardisierte Großserienfertigungen besonders geeignet.

Ein weiterer Grundgedanke der Erfindung ist es, ein Aufbrechen und/oder Abplatzen der Oxid- undloder Hydroxidschicht durch gezielte Beeinflussung deren Morphologie zu unterstützen und gegebenenfalls die Aluminium-Oberfläche des Werkstücks für eine besonders gute Benetzung mit Lotmaterial vorzubehandeln.

Dies geschieht gemäß einer vorteilhaften Ausführung mit Hilfe von Inhomogenitäten, wie beispielsweise Kerben, Poren und/oder Rissen und ähnlichem, in der Oxid- und/oder Hydroxidschicht. Diese Inhomogenitäten sind vorzugsweise durch chemische und/oder thermische und/oder mechanische Behandlung des Werkstücks in die Oxid- und/oder Hydroxidschicht eingebracht.

Bevorzugt während oder nach einer Oxidation wird beispielsweise auf das Lötwerkstück, das heißt auf die Oxid- undloder Hydroxidschicht, ein Schmiermittel aufgebracht, welches vorteilhafterweise halogenhaltig ist. Innerhalb des nachfolgenden Aufheizschrittes während des Lötvorgangs wird durch die derartige Modifizierung der Oxidschicht die Bildung von Inhomogenitäten gefördert, und die freigelegte Aluminium-Oberfläche wird durch die Halogenverbindungen derart aktiviert, dass diese mit Lot benetzt werden kann.

Der Wegfall eines Verfahrensschrittes einer Flussmittelapplikation ermöglicht eine gemeinsame Durchführung einer thermischen Entfettung und einer Verlötung in einem Lötofen, zum Beispiel in einem Durchlaufofen. Besonders vorteilhaft werden die beiden Verfahrensschritte während eines einzigen Aufwärmvorgangs durchgeführt.

Eine thermische Behandlung wird bevorzugt in einen gegebenenfalls ohnehin notwendigen Entfettungsprozess integriert, der zur Entfernung von Schmiermitteln durchgeführt wird. Besonders bevorzugt wird die thermische Behandlung und gegebenenfalls die Thermoentfettung in den Lötvorgang integriert, so daß nur noch eine Erwärmung notwendig ist. Dadurch ist eine weitere Senkung des Verfahrensaufwands möglich.

Zur Vereinfachung des Verfahrensablaufs erfolgt bevorzugt die Beaufschlagung mit den insbesondere halogenhaltigen Schmiermitteln vorzugsweise bei den vorgeschalteten Bearbeitungsprozessen des Werkstoffs, wie dem Tiefziehen, Beschneiden, Stanzen u.a., die verfahrensbedingt bereits eine Schmierung erfordern.

Des Weiteren sollte ohne großen zusätzlichen Aufwand eine Reoxidation an den Stellen der aufgebrochenen Oxidschicht unterbunden werden. Dafür enthalten die halogenhaltigen Schmiermittel Additive, die beim Erhitzen aufgebrochen werden und in ihren Bestandteilen eine Affinität zu Sauerstoff aufweisen, so dass sie den Sauerstoff in unmittelbarer Umgebung der zu fügenden Werkstücke selbst binden und damit die Lötatmosphäre und den Lotfluss verbessern. Als sauerstoffbindende Additive oder Bestandteile kommen dabei vorteilhafterweise Carboxylsäuren, Amine, Schwefel- und/oder Phosphorverbindungen in Betracht. Auch der Lötvorgang kann durch die Additive beziehungsweise Bestandteile positiv beeinflusst werden.

Magnesium bleibt unter Schutzgasatmosphäre in vergleichsweise großen Mengen erhalten, das heißt es verdampft nicht in dem Maße wie unter Vakuum, und kann somit einerseits die Verteilung des flüssigen Lots erleichtern sowie zu einer Verbesserung seiner Festigkeitseigenschaften des Werkstücks nach dem Lötprozess beitragen. Andererseits kann durch das teilweise Verdampfen des Magnesiums das oben beschriebene Aufbrechen der Oxidschicht unterstützt werden und beim Diffundieren des Magnesiums an die Oberfläche durch seine Reaktion mit dem dort befindlichen Restsauerstoff zu Magnesiumoxid (MgO) eine Reoxidation der Aluminium-Oberfläche unterbunden werden. Daher wird zum Verlöten zweckmäßigerweise ein Grundwerkstoff aus Aluminium mit einem erhöhten Magnesium-Gehalt eingesetzt. In besonders vorteilhafter Ausgestaltung des Verfahrens wird ein Grundwerkstoff aus Aluminium mit einem Magnesium-Gehalt größer 0,2 %, insbesondere größer 0,5 %, insbesondere kleiner 2 %, eingesetzt.

Dazu, dass die Aluminium-Oberfläche nicht erneut oxidiert wird und die noch bestehende Oxidschicht nicht weiter anwächst, trägt zweckmäßigerweise eine über den gesamten Temperaturbereich reduzierend wirkende Schutzgasatmosphäre bei. Beim Erwärmen und Löten wird daher Schutzgas, vorteilhafterweise Wasserstoff, Argon oder Stickstoff eingesetzt, wobei letzteres besonders kostengünstig ist. Der Einsatz von Schutzgasdurchlauföfen ermöglicht darüber hinaus einen hohen Grad an Automatisierung dieses Fertigungsprozesses.

Verwendung findet das beschriebene Verfahren zum flussmittelfreien Löten von Aluminium-Bauteilen wie beispielsweise Rohren, Scheiben, Rippen oder auch Halbzeugen wie Bändern für einen Wärmetauscher, insbesondere im Automobilbereich. Die erfindungsgemäßen Lötwerkstücke weisen vorzugsweise eine Schicht aus Lotmaterial auf, welches aus einer Aluminiumverbindunge besteht.

Die mit der Erfindung erzielten Vorteile bestehen insbesondere darin, dass vor dem Schutzgaslöten durch das Versehen einer Oberfläche eines Lötwerkstücks aus Aluminium und/oder Aluminiumverbindungen mit einer Oxid-und/oder Hydroxidschicht und das Beaufschlagen während oder nach der Oxidation mit insbesondere halogenhaltigen Schmiermitteln auf den Einsatz von Flussmitteln beim Löten verzichtet werden kann. Damit ist eine reduzierte Umweltbelastung sowie ein verminderter Geräteverschleiß und damit eine erhöhte Gerätestandzeit verbunden. Außerdem wird die Verwendung von zink- und/oder magnesiumhaltigen Werkstoffen für das Schutzgaslöten ermöglicht oder zumindest erleichtert.

Dabei erlaubt die Beaufschlagung mit den halogenhaltigen Schmiermitteln, dass während des Lötvorgangs ein Aufbrechen und/oder Abplatzen der Oxid- und/oder Hydroxidschicht unterstützt und die Aluminium-Oberfläche zugunsten einer verbesserten Lotbenetzung aktiviert wird sowie dass insbesondere durch deren Additive oder Bestandteile, die eine Affinität zu Sauerstoff aufweisen, eine Reoxidation der freigelegten Aluminium-Oberfläche zumindest erschwert wird. Zu letzterem trägt auch die über den gesamten Temperaturbereich reduzierend wirkende Schutzgasatmosphäre bei. Die beim Erwärmen gebildeten Inhomogenitäten können folglich derart mit Lot befüllt werden, dass die Ausbildung von festen und dauerhaften Lötverbindungen ermöglicht wird.

Damit ist ein besonders ökonomisches und vergleichsweise einfaches Verfahren zum flussmittelfreien Löten von Aluminium oder Aluminiumverbindungen bereitgestellt, das die Ausbildung besonders stabiler Lötverbindungen, beispielsweise von Aluminium-Bauteilen für Wärmetauscher, mit reproduzierbar gleichbleibender Qualität gewährleistet, wie es gerade für den großtechnischen Einsatz, insbesondere für die Serienfertigung im Automobilbereich, gefordert wird.

Ein Ausführungsbeispiel der Erfindung wird im Folgenden anhand einer Zeichnung näher erläutert. Darin zeigen:
- Figur 1: ein Lötwerkstück gemäß der vorliegenden Erfindung,
- Figur 2: ein Lötwerkstück gemäß der vorliegenden Erfindung und
- Figur 3: ein Lötwerkstück während eines erfindungsgemäßen Lötverfahrens.

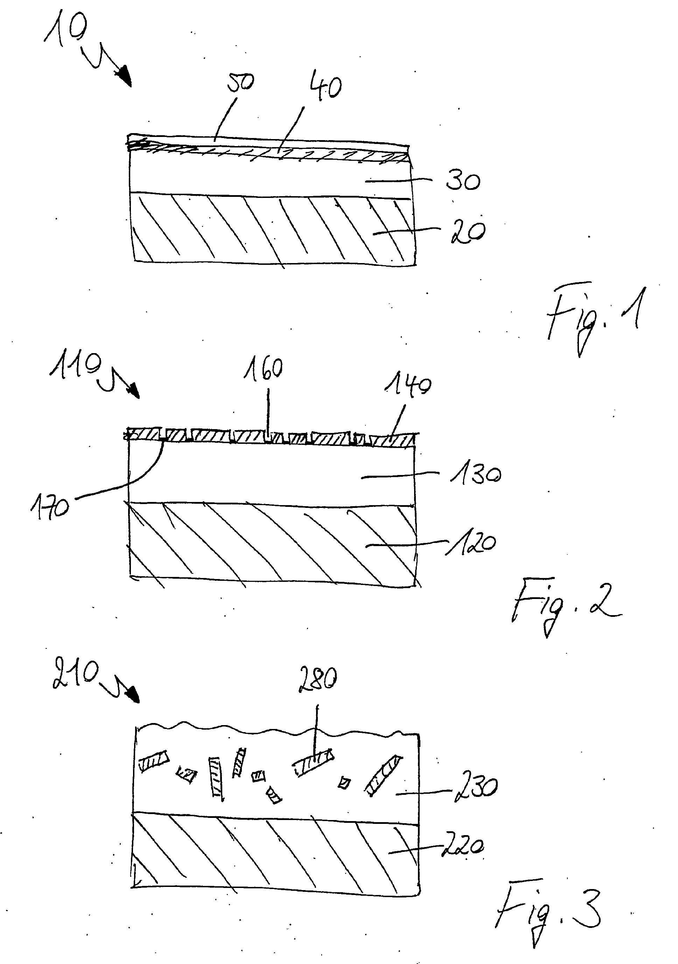

Die nicht maßstabsgetreue Fig. 1 zeigt ein Lötwerkstück 10 mit einem Grundkörper 20 aus einer Aluminiumlegierung, der mit einer Lotplattierung 30 aus einer Aluminiumlegierung mit einer Dicke von etwa 0,1 mm versehen ist. Auf der Oberfläche der Lotplattierung 30 ist eine Böhmitschicht 40 mit einer Dicke von etwa 100 nm aufgebracht.

Ein Schmiermittel 50 dient einer Erleichterung von Schneid- oder Stanzprozessen vor dem Lötverfahren. Die Applikation mit dem Schmiermittel 50 kann dabei während oder nach der Oxidation zur Herstellung der Böhmitschicht erfolgen.

Fig. 2 zeigt ein Lötwerkstück 110 mit einem Grundkörper 120 und einer Lotplattierung 130, die mit einer inhomogenen Oxid- und/oder Hydroxidschicht 140 bedeckt ist. Die Oxid- und/oder Hydroxidschicht 140 weist Kerben, Poren und/oder Risse 160 auf, in denen die Lotplattierung 130 lediglich mit einer natürlichen Oxid- und/oder Hydroxidschicht 170 von etwa 1 nm bis 5 nm Dicke bedeckt ist. Die Herstellung dieser Inhomogenitäten 160 kann beispielsweise während eines thermischen Entfettungsvorgangs geschehen, insbesondere wenn ein halogenhaltiges Schmiermittel entfernt wird. Bei hohen Temperaturen bewirken beziehungsweise fördern die Halogene die Bildung von solchen Inhomogenitäten.

Die Lötstellen zweier zu verbindender derartig vorbehandelter Werkstücke werden in bekannter Weise und daher nicht dargestellt entsprechend positioniert. Anschließend wird die gesamte Anordnung in einen Schutzgasofen, aus Automatisierungsgründen insbesondere in einen Schutzgasdurchlaufofen, eingebracht, in dem die vorbehandelten Werkstücke erwärmt werden.

Dabei treten einerseits (Fig. 1) Spannungen in der Böhmitschicht 40 und im Grenzbereich zwischen der Lotplattierung 30 Böhmitschicht 40 auf. Diese Spannungen führen bei Erwärmung auf die Löttemperatur gegebenenfalls unterstützt durch das halogenhaltige Schmiermittel 50 zur Bildung von Kerben, Poren und/oder Rissen in der Böhmitschicht 40 vorzugsweise in vertikaler Richtung bezüglich der Oberfläche der Lotplattierung 30 und zum teilweisen Ablösen der Böhmitschicht 40 von der Lotplattierung 30. Andererseits (Fig. 2) wird die Oxid- und/oder Hydroxidschicht 140 aufgrund der Kerben, Poren und/oder Risse 160 ebenfalls teilweise von der Lotplattierung 130 abgelöst.

Wie in Fig. 3 dargestellt ist, umfließt und/oder umspült das Lotmaterial 230 der Lotplattierung während des Lötvorgangs die abgelösten Bruchstücke 280 der Böhmit- beziehungsweise Oxid- und/oder Hydroxidschicht. Dadurch kann das verflüssigte Lotmaterial 230 den aus Aluminium bestehenden Grundkörper 220 des Werkstücks 210 benetzen, womit gewünschte Lötverbindungen ausgebildet werden.

## Patentansprüche

1. Lötwerkstück aus Aluminium undloder Aluminiumverbindungen, mit einer an einer Oberfläche des Lötwerkstücks angeordneten Oxid- und/oder Hydroxidschicht, **dadurch gekennzeichnet, daß** eine Dicke d der Oxid- und/oder Hydroxidschicht größer als 10 nm ist und, das Lötwerkstück eine Lotschicht aus einer Aluminiumverbindung aufweist, wobei die Oxid- und/oder Hydroxidschicht auf der lotschicht aufgebracht ist.

2. Lötwerkstück nach Anspruch 1, **dadurch gekennzeichnet, daß** 25 nm < d < 1000 nm, insbesondere 50 nm < d < 500 nm, insbesondere 80 nm < d < 250 nm.

3. Lötwerkstück nach einem der vorhergehenden Ansprüche, **dadurch gekennzeichnet, daß** die Oxid- und/oder Hydroxidschicht überwiegend aus Böhmit besteht.

4. Lötwerkstück nach einem der vorhergehenden Ansprüche, **dadurch gekennzeichnet, daß** die Oxid- und/oder Hydroxidschicht Inhomogenitäten, insbesondere Kerben, Poren und/oder Risse aufweist.

5. Lötwerkstück nach einem der vorhergehenden Ansprüche, **dadurch gekennzeichnet, daß** die Inhomogenitäten durch chemische und/oder thermische undloder mechanische Behandlung des Lötwerkstücks in die Oxid- und/oder Hydroxidschicht eingebracht sind.

6. Lötwerkstück nach einem der vorhergehenden Ansprüche, **dadurch gekennzeichnet, daß** das Lötwerkstück mit einem insbesondere halogenhaltigen Schmiermittel versehen ist.

7. Lötwerkstück nach einem der vorhergehenden Ansprüche, **dadurch gekennzeichnet, daß** das Schmiermittel Additive oder Bestandteile wie Carboxylsäuren, Amine, Schwefel- und/oder Phosphorverbindungen aufweist.

8. Lötwerkstück nach einem der vorhergehenden Ansprüche, **dadurch gekennzeichnet, daß** ein Grundwerkstoff des Lötwerkstücks einen Magnesium-Gehalt größer 0,2 %, insbesondere größer 0,5 %, vorzugsweise kleiner 2 % aufweist.

9. Lötverfahren zur Verbindung zumindest zweier Werkstücke miteinander, **dadurch gekennzeichnet, daß** zumindest ein nach einem der vorhergehenden Ansprüche ausgebildetes Werkstück verwendet wird.

10. Lötverfahren nach Anspruch 9, mit vorgeschalteten Bearbeitungsprozessen zumindest eines Werkstücks, insbesondere Tiefziehen, Beschneiden undloder Stanzen, **dadurch gekennzeichnet, daß** eine Beaufschlagung des Werkstücks mit einem insbesondere halogenhaltigen Schmiermittel bei den vorgeschalteten Bearbeitungsprozessen erfolgt.

11. Lötverfahren nach einem der vorhergehenden Ansprüche, **dadurch gekennzeichnet, daß** das Schmiermittel Additive oder Bestandteile wie Carboxylsäuren, Amine, Schwefel- undloder Phosphorverbindungen aufweist.

12. Lötverfahren nach einem der vorhergehenden Ansprüche, **dadurch gekennzeichnet, daß** eine thermische Entfettung und der Lötvorgang gemeinsam, insbesondere während eines einzigen Aufwärmvorgangs durchgeführt werden.

13. Lötverfahren nach einem der vorhergehenden Ansprüche, **dadurch gekennzeichnet, daß** für eine Erwärmung und/oder Lötung ein Schutzgas, insbesondere Wasserstoff, Argon oder Stickstoff eingesetzt wird.

14. Wärmetauscher, insbesondere für ein Kraftfahrzeug, **dadurch gekennzeichnet, daß** der Wärmetauscher zumindest ein Werkstück aufweist, welches nach einem der Ansprüche 1 bis 8 ausgebildet ist.

## Claims

1. A soldering workpiece made from aluminium and/or aluminium compounds, having an oxide and/or hydroxide layer arranged at a surface of the soldering workpiece, **characterized in that** a thickness d of the oxide and/or hydroxide layer is greater than 10 nm, and the soldering workpiece has a solder layer comprising an aluminium compound, the oxide and/or hydroxide layer being applied to the solder layer.

2. The soldering workpiece as claimed in claim 1, **characterized in that** 25 nm < d < 1000 nm, in particular 50 nm < d < 500 nm, in particular 80 nm < d < 250 nm.

3. The soldering workpiece as claimed in one of the preceding claims, **characterized in that** the oxide and/or hydroxide layer consists predominantly of boehmite.

4. The soldering workpiece as claimed in one of the preceding claims, **characterized in that** the oxide and/or hydroxide layer includes inhomogeneities, in particular notches, pores and/or cracks.

5. The soldering workpiece as claimed in one or the preceding claims, **characterized in that** the inhomogeneities are introduced into the oxide and/or hydroxide layer by chemical and/or thermal and/or mechanical treatment of the soldering workpiece.

6. The soldering workpiece as claimed in one of the preceding claims, **characterized in that** the soldering workpiece is provided with an in particular halogen-containing lubricant.

7. The soldering workpiece as claimed in one of the preceding claims, **characterized in that** the lubricant includes additives or constituents such as carboxylic acids, amines, sulfur compounds and/or phosphorus compounds.

8. The soldering workpiece as claimed in one of the preceding claims, **characterized in that** a base material of the soldering workpiece has a magnesium content of greater that 0.2%, in particular greater than 0.5%, preferably less than 2%.

9. A soldering process for joining at least two workpieces to one another, **characterized in that** at least one workpiece as described in one of the preceding claims is used.

10. The soldering process as claimed in claim 9, with the preceding machining processes being carried out on at least one workpiece, in particular deep-drawing, cutting and/or punching, **characterized in that** an in particular halogen-containing lubricant is applies to the workpiece during the prior machining processes.

11. The soldering process as claimed in one of the preceding claims, **characterized in that** the lubricant includes additives or constituents such as carboxylic acids, amines, sulfur compounds and/or phosphorus compounds.

12. The soldering process as claimed in one of the preceding claims, **characterized in that** thermal degreasing and the soldering operation are carried out together, in particular during a single heating operation.

13. The soldering process as claimed in one of the preceding claims, **characterized in that** a shielding gas, in particular hydrogen, argon or nitrogen, is used for heating and/or soldering.

14. A heat exchanger, in particular for a motor vehicle, **characterized in that** the heat exchanger comprises at least one workpiece, which is implemented as claimed in one of claims 1 to 8.

## Revendications

1. Pièce à braser en Aluminium et / ou constituée de composés de l'aluminium, comportant une couche d'oxyde et / ou d'hydroxyde disposée sur une surface de la pièce à braser,
**caractérisée en ce qu'**une épaisseur d de la couche d'oxyde et / ou d'hydroxyde est supérieure à 10 nm, et la pièce à braser présente une couche de métal d'apport provenant d'un composé de l'aluminium, où la couche d'oxyde et / ou d'hydroxyde est appliquée sur la couche de métal d'apport.

2. Pièce à braser selon la revendication 1, dont l'épaisseur d se **caractérise par** la relation : 25 nm < d < 1000 nm, en particulier 50 nm < d < 500 nm, en particulier 80 nm < d < 250 nm.

3. Pièce à braser selon l'une ou l'autre des revendications précédentes, **caractérisée en ce que** la couche d'oxyde et / ou d'hydroxyde se compose principalement de boehmite.

4. Pièce à braser selon l'une quelconque des revendications précédentes, **caractérisée en ce que** la couche d'oxyde et / ou d'hydroxyde présente des inhomogénéités, en particulier des entailles, des pores et / ou des fissures.

5. Pièce à braser selon l'une quelconque des revendications précédentes, **caractérisée en ce que** des inhomogénéités sont introduites dans la couche d'oxyde et / ou d'hydroxyde, par traitement chimique et / ou thermique et / ou mécanique de la pièce à braser.

6. Pièce à braser selon l'une quelconque des revendications précédentes, **caractérisée en ce que** la pièce à braser est dotée d'un lubrifiant en particulier halogéné.

7. Pièce à braser selon l'une quelconque des revendications précédentes, **caractérisée en ce que** le lubrifiant comporte des auditifs ou des éléments comme des acides carboxyliques, des amines, des composés de soufre et / ou de phosphore.

8. Pièce à braser selon l'une quelconque des revendications précédentes, **caractérisée en ce qu'**un matériau de base de la pièce à braser présente une teneur en magnésium supérieure à 0,2 %, en particulier supérieure à 0,5 %, de préférence inférieure à 2 %.

9. Procédé de brasage servant à l'assemblage, l'une avec l'autre, d'au moins deux pièces d'usinage, **caractérisé en ce qu'**au moins une pièce d'usinage est utilisée en étant configurée selon l'une quelconque des revendications précédentes.

10. Procédé de brasage selon la revendication 9 comportant des opérations d'usinage effectuées en amont, d'au moins une pièce d'usinage, en particulier l'emboutissage profond, le cisaillement et / ou le matriçage, **caractérisé en ce qu'**une alimentation de la pièce d'usinage dotée d'un lubrifiant en particulier halogéné intervient au cours des opérations d'usinage effectuées en amont.

11. Procédé de brasage selon l'une quelconque des revendications précédentes, **caractérisé en ce que** le lubrifiant comporte des additifs ou des éléments comme des acides carboxyliques, des amines, des composés de soufre et / ou de phosphore.

12. Procédé de brasage selon l'une quelconque des revendications précédentes, **caractérisé en ce qu'**un dégraissage thermique et le processus de brasage sont effectués en même temps, en particulier au cours d'un unique processus de chauffage.

13. Procédé de brasage selon l'une quelconque des revendications précédentes, **caractérisé en ce que**, pour un chauffage et / ou un brasage, on introduit un gaz inerte, en particulier de l'hydrogène, de l'argon ou de l'azote.

14. Echangeur de chaleur, en particulier pour un véhicule automobile, **caractérisé en ce que** l'échangeur de chaleur présente au moins une pièce d'usinage qui est configurée selon l'une quelconque des revendications 1 à 8.
